(19) Europäisches Patentamt
European Patent Office
Office européen des brevets

(11) **EP 2 592 773 A1**

(12) **EUROPEAN PATENT APPLICATION**

(43) Date of publication:
**15.05.2013 Bulletin 2013/20**

(51) Int Cl.:
*H04L 1/00* (2006.01)          *H03M 13/27* (2006.01)
*H04L 27/34* (2006.01)

(21) Application number: **11188628.9**

(22) Date of filing: **10.11.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Panasonic Corporation
Kadoma-shi
Osaka 571-8501 (JP)**

(72) Inventor: **Petrov, Mihail
63225 Langen (DE)**

(74) Representative: **Grünecker, Kinkeldey,
Stockmair & Schwanhäusser
Leopoldstrasse 4
80802 München (DE)**

(54) **Improved diversity fo rotated constellations with time-frequency slicing**

(57)     The present invention provides methods, transmitters, and receivers for digital communication systems with improved time and channel diversity for rotated QAM constellations with time-frequency slicing. This is achieved by spreading the components of each constellation block evenly over time so that the temporal distance between components of the same constellation block is maximized. Moreover, a cyclic shift may be applied to the cells of some cycles in a time-frequency slicing scheme in order to ensure that the components of all constellation blocks are evenly distributed over all frequency channels. The amount of shift applied may depend on the specifics of the constellation and the time-frequency slicing scheme employed. Specific implementations of a permutation that is to be applied to the cells of a forward-error-correction block are disclosed.

Fig. 21

**Description**

TECHNICAL FIELD

The present invention relates to the field of digital communications and more specifically to improving both the time and the frequency diversity for rotated QAM constellations when used with time-frequency slicing, as well as to corresponding methods, transmitters, and receivers.

BACKGROUND OF THE INVENTION

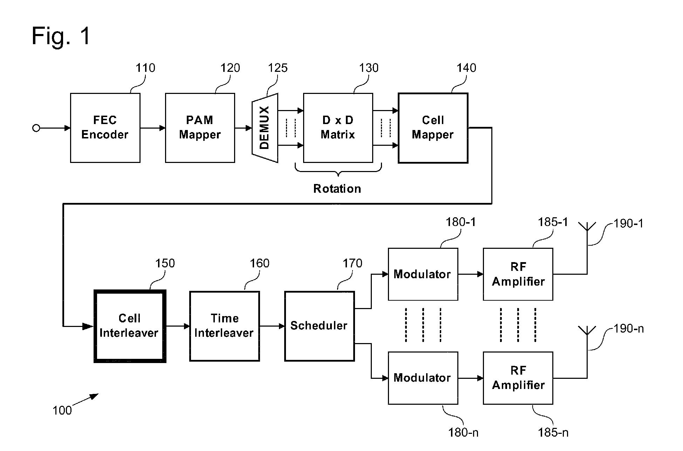

Figure 1 shows the block diagram of a transmitter-side communication chain that employs rotated quadrature amplitude modulation (QAM) constellations and time-frequency slicing (TFS). The transmitter 100 receives at its input binary blocks of a predetermined length, which contain the information to be transmitted.

Each information block is first encoded by a forward-error-correction (FEC) encoder 110, the encoding process consisting in adding redundancy in order to make the reception of the information block more robust against errors. Two notable examples of FEC code families are the low-density parity-check (LDPC) codes and the turbo codes.

The bits of the encoded FEC codeword, thereafter referred to as FEC block, are demultiplexed into groups of B bits and encoded (mapped) by PAM mapper 120 onto real-valued pulse amplitude modulation (PAM) symbols, each taking a value from a discrete set of $2^B$ values. How the B bits are mapped to PAM symbols is well understood and not directly relevant to the present invention. The relevant aspect is that each FEC block is transformed into a block of PAM symbols.

Prior to being mapped onto PAM symbols, the FEC block may undergo additional processing steps, such as bit permutation or puncturing. These details are well known in the art and not relevant to the present invention.

The real PAM symbols produced by the PAM mapper 120 are then demultiplexed by demultiplexer 125 into vectors of D symbols each. These vectors can be regarded as identifying unique points in a D-dimensional space, the resulting $2^{BD}$ combinations forming a multi-dimensional constellation. Each vector is multiplied by an orthogonal DxD matrix, which can be regarded as a generalized rotation in the D-dimensional space, hence the term *rotated constellations.* The particular structure of the rotation matrix is not relevant to the present invention. The use of rotated constellations is explained in greater detail in European patent application EP 2288048A, which is incorporated herewith in its entirety.

Preferably, D is a power of 2 (usually 2, 4 or 8), and the number of PAM symbols per FEC block may be a multiple of D. In the following, the rotated vectors of D real symbols will be referred to as constellation blocks and the real symbols as components or dimensions.

After the rotation step, the real symbols are mapped to complex symbols, which are also referred to as *cells.* This function is performed by cell mapper 140. In the following, the number of cells per FEC block will be denoted by C.

The cells of each FEC block are then permuted by cell interleaver 150. Details of the permutation process, which are intimately related to the present invention, will be described here below.

In order to increase the time diversity of the system, the cells of each FEC block are then spread in time, typically through interleaving with cells from other FEC blocks. This function is performed by time interleaver 160, which can be a block interleaver, a convolutional interleaver, or a combination of both. In the DVB-T2 standard for example, the time interleaver is a block interleaver.

Typically the time interleaver does not change the ordering of the cells within a FEC block. That function is performed by the cell interleaver alone. In a real implementation, however, it is possible to combine the two functions in a single interleaver.

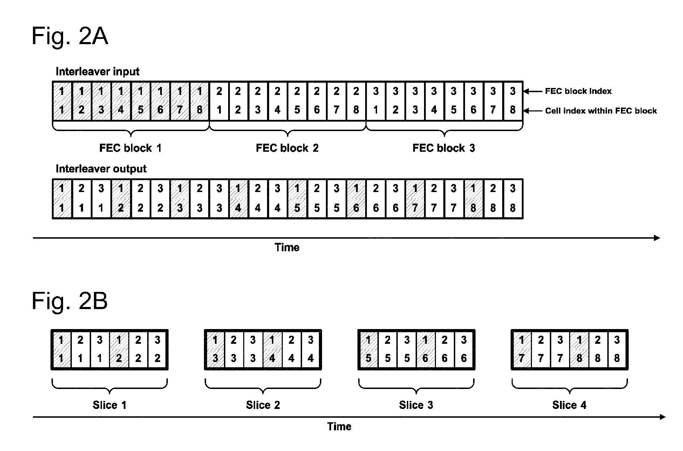

An example of time interleaving is shown in Figure 2A for three FEC blocks, each block consisting of eight complex cells. The cells of the first FEC block are highlighted to improve clarity. It is easy to see that the time interleaver increases the time interval in which the cells of a FEC block are transmitted, thus increasing the time diversity. This time interval is also referred to as interleaving duration.

In frame-based communication systems, the time interleaving duration is typically one frame or an integer number of frames. Moreover, the time-interleaved cells can be spread over the whole frame or transmitted in bursts. The bursts are also referred to as slices and the process as slicing. It is possible to transmit one burst per frame, multiple bursts per frame, or one burst per several frames. In the following the number of slices will be denoted by $N_S$.

In order to maximize the time diversity, each FEC block should be spread as evenly as possible over the interleaving duration. When slicing is used, the slices should be of roughly the same length and each FEC block should have roughly the same number of cells in each slice. Preferably, the slices are transmitted in equally-spaced bursts.

Figure 2B shows how the interleaved sequence of cells of Figure 2A can be sliced and transmitted in a sequence of four equally-spaced bursts. It can be seen that each slice contains two cells from each FEC block. The time diversity of this configuration is clearly optimal.

The allocation of the interleaved cells to the available transmit resources is performed by scheduler 170 in Fig. 1. The transmit resources can be samples, in the case of single-carrier modulation, or multi-carrier symbols, in the case of multi-carrier modulation such as OFDM. In OFDM the symbols themselves consist of a plurality of complex cells. In any case the mapping is assumed to be monotonic, i.e. the ordering of the cells in time is not changed. The scheduling (allocation) of the cells is typically signaled to the receiver through dedicated signaling information.

When time-frequency slicing is used, the scheduler 170 also allocates the cells to the available RF channels in a TFS group. How this is done will be explained later. For each RF channel i=1, ..., n, the scheduler output is further processed by a chain comprising at least a modulator 180-i, an up-converter from digital baseband to analog RF (not shown), and an RF power amplifier 185-i. The modulator 180-i uses e.g. orthogonal frequency-division multiplexing (OFDM) modulation and may include frequency interleaving for increased frequency diversity.

A conventional approach for increasing the reliability of a communication system consists of exploiting the diversity available over a plurality of RF channels, hereafter referred to as channel diversity. The main type of diversity is the frequency diversity, which results from the fact that fading in wireless channels tends to be frequency selective and thus the fading correlation between any two RF channels is relatively low. Moreover, if the transmitters for the different RF channels are located in different geographical locations, the fading correlation is even lower and the present invention is even more advantageous. In this case, also the so-called spatial diversity is exploited. The channel diversity results therefore from both the frequency and the spatial diversity.

In order to enable the reception with a single tuner in the receiver, the information to be received continuously, e.g. a broadcast program, must not be sent over more than one RF channel at any given time. It is therefore necessary to use a time-frequency slicing schedule, so that the receiver can hop from one frequency to the other and extract the desired data from each RF channel during the appropriate slice. The scheduling (time-frequency allocation) of the slices is typically signaled to the receiver through dedicated signaling information.

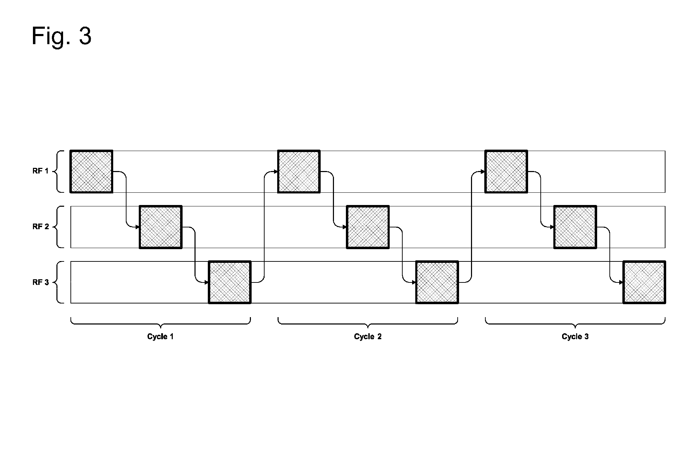

An example of TFS slicing and scheduling is shown in Figure 3 for three RF channels and three TFS hopping cycles. In order to allow the tuner to hop from one RF channel to the next, a guard interval is required between two consecutive slices.

In the following, the number of RF channels in a TFS group will be denoted by $N_{RF}$ and the number of TFS cycles over which a FEC block is spread by $N_C$. The number of slices over which a FEC block is spread is therefore $N_S=N_{RF}*N_C$. An optimal diversity is achieved when all slices have the same length and each FEC block has the same number of cells in all slices.

In addition to the time and channel diversity issues mentioned above, when rotated constellations are used, achieving optimal performance requires that the channel fading experienced by the D dimensions of each constellation block be as uncorrelated as possible.

A conventional solution for reducing the correlation of the fading experienced by the D dimensions of a constellation block is known from the DVB-T2 standard (ETSI EN 302 755) for rotated constellations in two dimensions. The conventional solution comprises the following steps:

1. Apply a 2D rotation between the real and imaginary components of each complex cell.

2. Apply a relative cyclic delay of one cell between the real and the imaginary components of the $N_c$ cells in each FEC block.

3. Apply a pseudo-random permutation to the cells of each FEC block. The corresponding block in DVB-T2 is known as cell interleaver.

Further details on the above steps are disclosed in the document ETSI EN 302 755 V1.1.1 (2009-09), available at http://www.etsi.org and incorporated herein by reference.

The conventional solution reduces the average correlation of the fading experienced by the two dimensions of each constellation. However, due to the random nature of the permutation, some components of the same constellation block may end up very close to each other while some other components may end up very far from each other. Also, some components may not be spread over all $N_{RF}$ channels. Therefore, time and channel diversity of the conventional solution is not optimal.

SUMMARY OF THE INVENTION

It is an object of the present invention to further improve the diversity of rotated constellations in a digital communication system that employs time-frequency slicing. Specifically, it is an object of the present invention to minimize the average correlation of the fading experienced by the components of each constellation block.

This is achieved by the features as set forth in the independent claims. Preferred embodiments are the subject matter of dependent claims.

It is the particular approach of the present invention to to arrange the real and imaginary components of the cells in a FEC block such that the distance, both in time and frequency direction, between any two components of a given constellation block is maximized and roughly the same for all constellation blocks.

According to a first aspect of the present invention, a method for transmitting digital data over a plurality of $N_{RF}$ frequency channels is provided. The method comprises the steps of encoding a block of data with a forward error correction code; mapping the encoded block of data to a sequence of real-valued symbols, the sequence of real-valued symbols being divided into a plurality of D-dimensional vectors; transforming each of the D-dimensional vectors by multiplying the vector with an orthogonal matrix, resulting in a plurality of constellation blocks, each constellation block consisting of D real-valued transformed symbols; mapping the real-valued transformed symbols of the plurality of constellation blocks to a sequence of complex symbols such that the D real-valued transformed symbols of each constellation block are essentially evenly distributed over the sequence of complex symbols; dividing the sequence of complex symbols into a plurality of slices, each slice being mapped to one of the $N_{RF}$ frequency channels; and transmitting the complex symbols of each slice over the corresponding frequency channel.

Preferably, the complex symbols of each slice are transmitted over the corresponding frequency channel such that any two consecutive complex symbols of the sequence of complex symbols are transmitted either simultaneously or in the stated order. In other words, the transmission process does not alter the order of the complex symbols.

Preferably, the mapping of the real-valued transformed symbols to the sequence of complex symbols is performed such that a minimum distance between complex symbols with symbols of the same constellation block is, with at most one exception, the same for all constellation blocks. In this manner, the temporal distance between components of the same constellation block can be maximized simultaneously for all constellation blocks - and, therewith, the time diversity.

Further, the mapping of the real-valued transformed symbols to the sequence of complex symbols is preferably performed such that each of the D real-valued transformed symbols of any given constellation block is transmitted via a distinct frequency channel if the number of dimension D is less than or equal to the number of frequency channels $N_{RF}$, or such that at least $N_{RF}$ real-valued transformed symbols of any given constellation block are transmitted via a distinct frequency channel if the number of dimension D is greater than the number of frequency channels $N_{RF}$. In this manner, the frequency spacing between components of the same constellation block can be maximized simultaneously for all constellation blocks - and, therewith, the frequency (channel) diversity.

In a preferred embodiment, the step of mapping the real-valued transformed symbols to the sequence of complex symbols is performed by mapping the D real-valued transformed symbols of each constellation block to D adjacent complex cells, and applying a permutation to the sequence of complex symbols, said permutation being equivalent to writing the sequence of complex symbols into a matrix with D rows column by column and reading out the complex symbols row by row.

In another preferred embodiment with D=2, the step of mapping the real-valued transformed symbols to the sequence of complex symbols is performed by mapping the two real-valued transformed symbols of each constellation block to one complex symbol of the sequence of complex symbols, and applying a cyclic shift to either the real or the imaginary components of the sequence of complex symbols such that the real and the imaginary components are rotated relative to each other by a certain number of complex symbols, the certain number of complex symbols being equal to half the number of complex symbols within the sequence of complex symbols.

In another preferred embodiment, a cyclic shift is applied to the complex symbols of a cycle of $N_{RF}$ consecutive slices such that the D real-valued transformed symbols of each constellation block are essentially evenly distributed over the $N_{RF}$ frequency channels. More specifically, the sequence of complex symbols may be divided into a plurality of $N_c$ cycles and each cycle into a plurality of $N_{RF}$ slices, the slices of each cycle being mapped to a different one of the $N_{RF}$ frequency channels, the sequence of complex symbols may be divided into $N_P$ periods, $N_P$ being the greatest common divisor of the number of cycles $N_c$ and the number of dimensions D, and, if the number of periods $N_P$ is greater than one, a cyclic shift may be applied to the complex symbols of each cycle of a period of the plurality of periods, such that the complex symbols of the cycle are rotated by a certain fraction of the number of complex symbols in the cycle, the certain fraction being equal to $p/D$ with p = 0, ..., $N_P$- 1 being a zero-based index of the period. Due to the additional cyclic shift, it can be ensured that the D real-valued symbols of any given constellation block are distributed over all channels as evenly as possible, whatever the specific TFS configuration.

According to a further aspect of the present invention, a method for receiving digital data over a plurality of $N_{RF}$ frequency channels is provided. The method comprises the steps of receiving complex symbols of each slice of a plurality of slices over a corresponding one of the $N_{RF}$ frequency channels; obtaining a sequence of complex symbols by joining the received complex symbols; demapping a plurality of constellation blocks from the sequence of complex symbols, each constellation block consisting of D real-valued symbols, the D real-valued symbols of each constellation block being essentially evenly distributed over the sequence of complex symbols; demapping an encoded block of data from the sequence of real-valued symbols; and subjecting the encoded block of data to forward error correction decoding.

Preferably, each real-valued symbol indicates one of a plurality of predefined pulse amplitude modulation symbols. Furthermore, D is preferably a power of 2, in particular 2 or 4 or 8.

Preferably, a number of complex symbols per slice differs preferably by at most one among the plurality of $N_F$ slices such that all slices consist of essentially the same number of complex symbols, resulting in an even distribution of all symbols over time and frequency.

According to a further aspect of the present invention, a transmitter for transmitting digital data over a plurality of $N_{RF}$ frequency channels is provided. The transmitter comprises an encoder for encoding a block of data with a forward error correction code; a symbol mapper for mapping the encoded block of data to a sequence of real-valued symbols, the sequence of real-valued symbols being divided into a plurality of $D$-dimensional vectors; a transform unit for transforming each of the D-dimensional vectors by multiplying the vector with an orthogonal matrix, resulting in a plurality of constellation blocks, each constellation block consisting of D real-valued transformed symbols; a cell mapper for mapping the real-valued transformed symbols of the plurality of constellation blocks to a sequence of complex symbols; a cell interleaver for permuting the sequence of complex symbols such that the D real-valued transformed symbols of each constellation block are essentially evenly distributed over the permuted sequence of complex symbols; a scheduler for dividing the sequence of complex symbols into a plurality of slices, each slice being mapped to one of the $N_{RF}$ frequency channels; and a plurality of modulators for transmitting the complex symbols of each slice over the corresponding frequency channel.

According to a further aspect of the present invention, a receiver for receiving digital data over a plurality of $N_{RF}$ frequency channels is provided. The receiver comprises a demodulator for receiving complex symbols of each slice of a plurality of slices over a corresponding one of the $N_{RF}$ frequency channels and for obtaining a sequence of complex symbols by joining the received complex symbols; a cell deinterleaver and demapper for demapping a plurality of constellation blocks from the sequence of complex symbols, each constellation block consisting of D real-valued symbols, the D real-valued symbols of each constellation block being essentially evenly distributed over the sequence of complex symbols; a constellation demapper for demapping an encoded block of data from the sequence of real-valued symbols; and a decoder for subjecting the encoded block of data to forward error correction decoding.

The above and other objects and features of the present invention will become more apparent from the following description and preferred embodiments given in conjunction with the accompanying drawings, in which:

Fig. 1      is a block diagram of a transmitter employing rotated constellation and time-frequency slicing;

Fig. 2A      shows an example of time interleaving;

Fig. 2B      shows an example slicing the time interleaved output of Fig. 2A;

Fig. 3      is a schematic illustration of time-frequency slicing with 3 RF channels;

Fig. 4A      illustrates the spreading of a 2D-RC constellation block evenly over the FEC block;

Fig. 4B      illustrates the spreading of a 4D-RC constellation block evenly over the FEC block;

Fig. 4C      illustrates the resulting distribution when slicing is applied to the example of Fig. 4A;

Fig. 4D      illustrates the resulting distribution when slicing is applied to the example of Fig. 4B;

Fig. 5      is a schematic illustration of separating the two components of 2D-RC in accordance with an embodiment of the present invention;

Fig. 6A      is a schematic illustration of separating the two components of 2D-RC in accordance with another embodiment of the present invention;

Fig. 6B      is a schematic illustration of separating the four components of 4D-RC in accordance with another embodiment of the present invention;

Fig. 7      is a schematic illustration of mapping the D components of 2D-RC and 4D-RC onto D adjacent cells in accordance with another embodiment of the present invention;

Fig. 8A      illustrates the column-row permutation for spreading two adjacent components evenly over the FEC block;

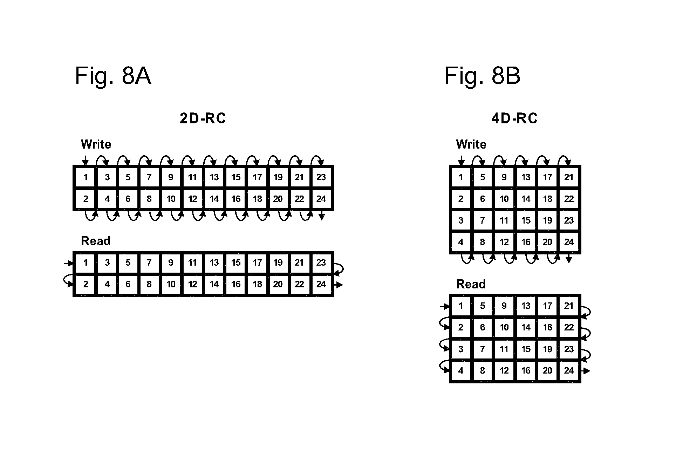

Fig. 8A      illustrates the column-row permutation for spreading four adjacent components evenly over the FEC block;

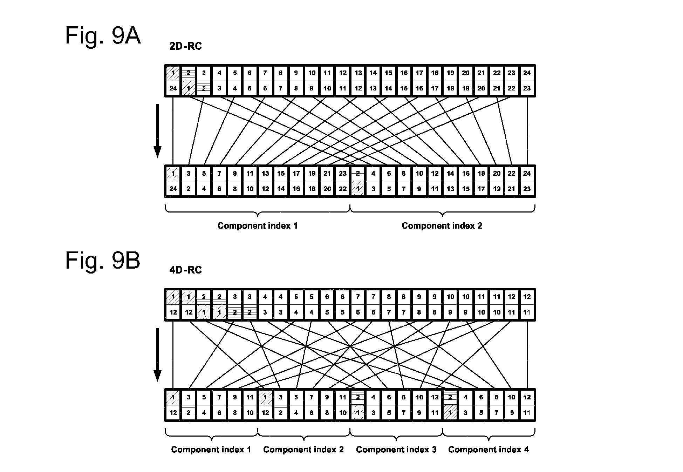

Fig. 9A      shows the resulting mapping of the constellation components after the permutation step for two-dimensional rotated constellations;

Fig. 9B      shows the resulting mapping of the constellation components after the permutation step for four-dimensional rotated constellations;

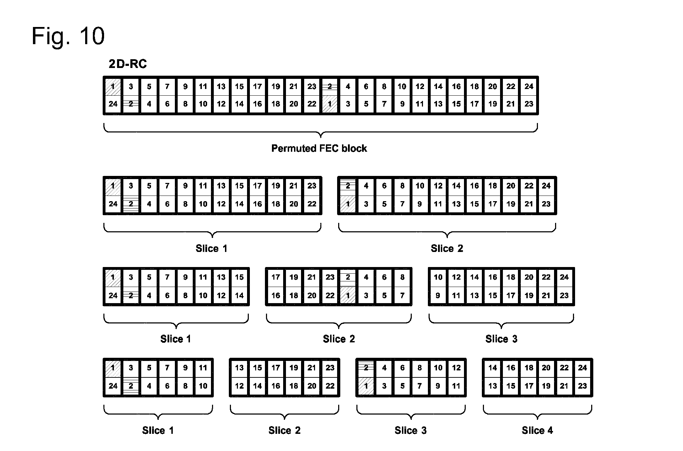

Fig. 10      shows various examples for slicing a FEC block with 2D-RC;

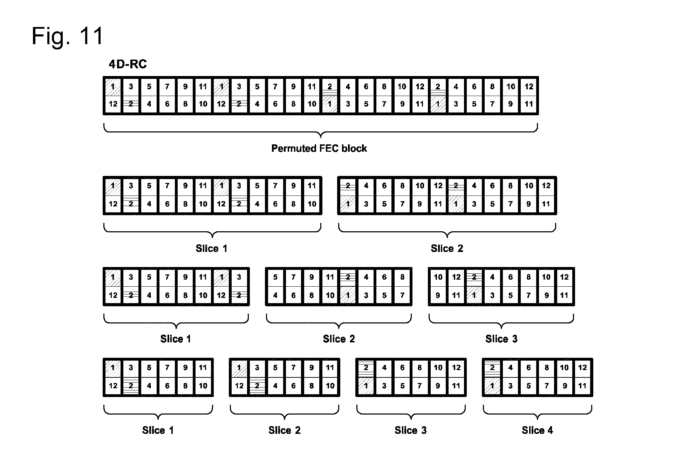

Fig. 11      shows various examples for slicing a FEC block with 2D-RC;

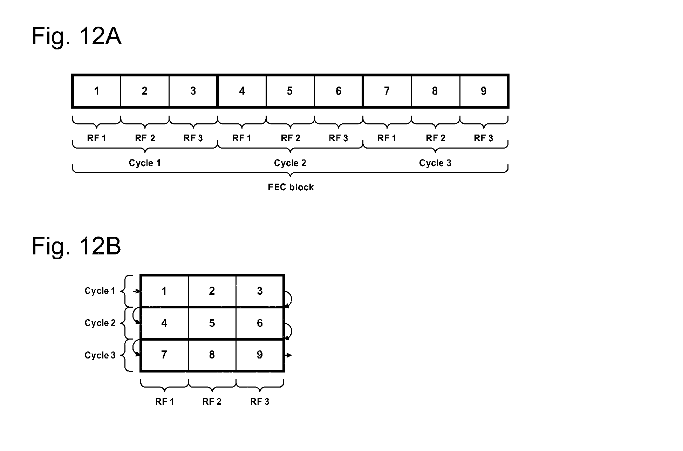

Fig. 12A      illustrates the slicing of a FEC block for TFS

Fig. 12B      illustrates the slicing of a FEC block for TFS in an alternative representation;

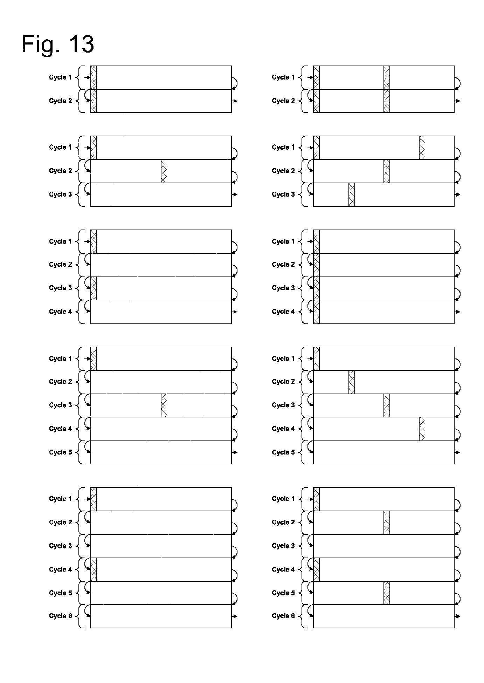

Fig. 13      illustrates the component distribution for 2D-RC and 4D-RC various TFS schemes;

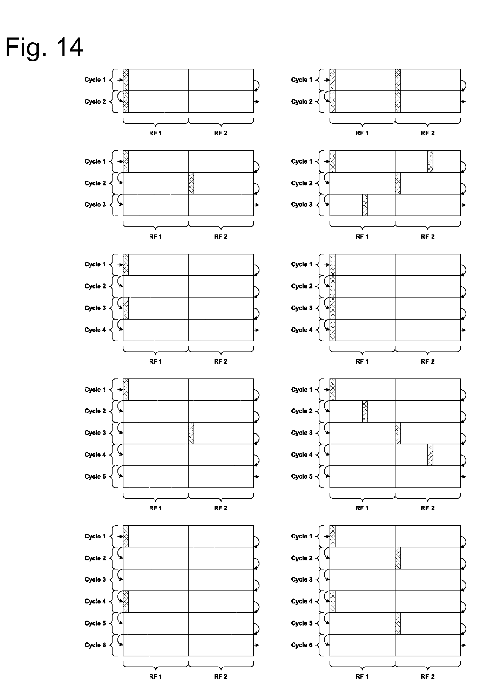

Fig. 14      illustrates the component distribution for 2D-RC and 4D-RC various TFS schemes with two RF channels;

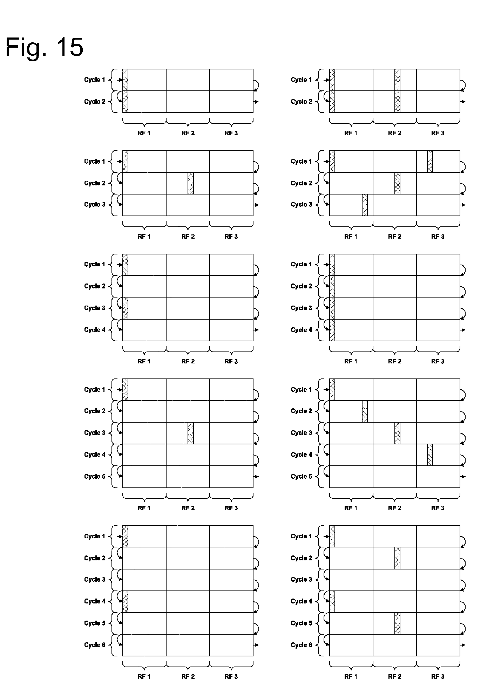

Fig. 15     illustrates the component distribution for 2D-RC and 4D-RC various TFS schemes with three RF channels;

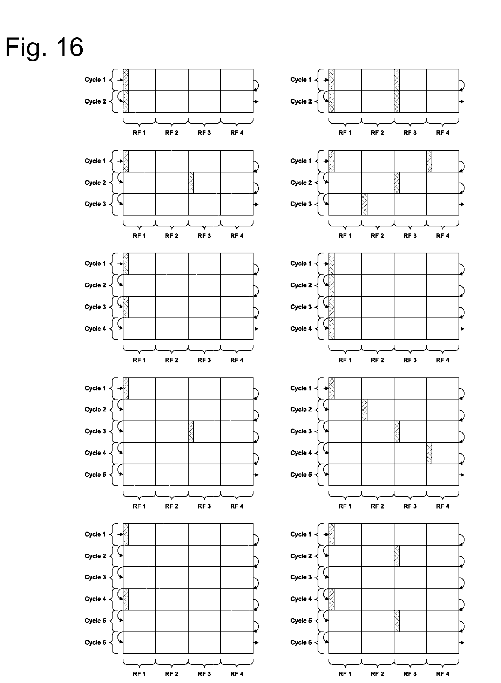

Fig. 16     illustrates the component distribution for 2D-RC and 4D-RC various TFS schemes with four RF channels;

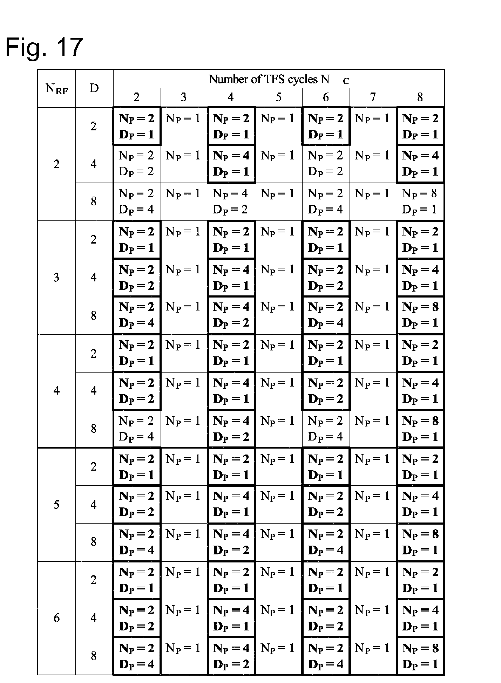

Fig. 17     is a table of various TFS configurations;

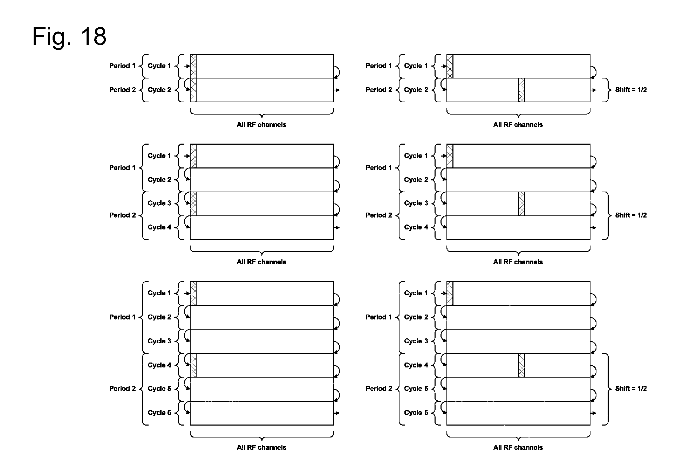

Fig. 18     illustrates the additional cyclic shifts that are applied to some cycles of a FEC block for 2D-RC, in accordance with a preferred embodiment of the present invention;

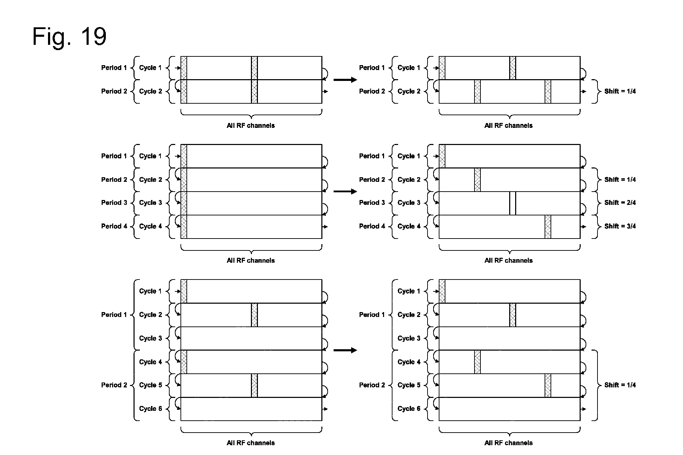

Fig. 19     illustrates the additional cyclic shifts that are applied to some cycles of a FEC block for 4D-RC, in accordance with a preferred embodiment of the present invention;

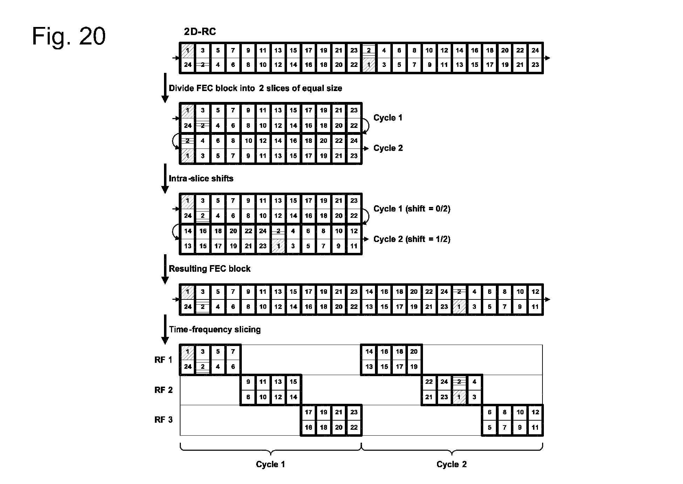

Fig. 20     illustrates the additional processing of the FEC block for two TFS cycles and three RF channels, for 2D-RC;

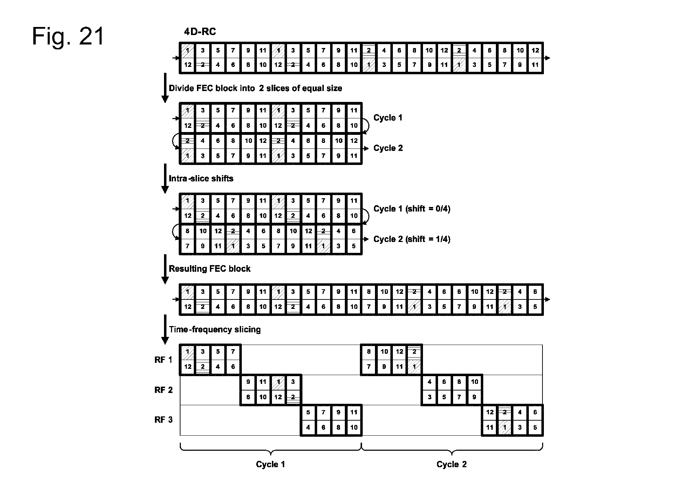

Fig. 21     illustrates the additional processing of the FEC block for two TFS cycles and three RF channels, for 4D-RC; and

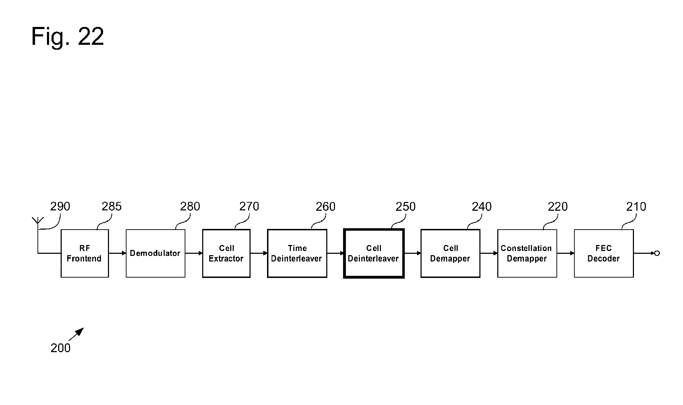

Fig. 22     is a block diagram of a receiver employing rotated constellation and time-frequency slicing.

DETAILED DESCRIPTION

In a communication system that employs rotated constellations, it is important that the components of a constellation block experience uncorrelated channel fading. Therefore, the D components are preferably mapped to D different complex cells and the channel fading experienced by these cells should be as uncorrelated as possible. In this way, the gain of the rotated constellations, and thus the performance of the system, is maximized.

In the general case of rotated constellations in D dimensions, the inventor has realized that the best performance is obtained if the time intervals (distances) between two components of the same constellation block are as evenly distributed as possible and as large as possible, for all constellation blocks of a FEC block.

In addition, in order to take advantage of the channel diversity available with time-frequency slicing (TFS), the D components are also spread as evenly as possible over the $N_{RF}$ channels in the TFS group. The number of channels typically amounts to 2 to 6.

Hence, in accordance with a first aspect of the present invention, the correlation of the D components of a constellation block is minimized by maximizing the average time interval between the components. Preferably, the distance between two consecutive components is the same. In other words, the D components must be spread as evenly as possible over a given time interval. This time interval is typically the time-interleaving duration.

Specifically, in accordance with a second aspect of the present invention, the D components may be spread evenly over a time interval by spreading every constellation block of a FEC block evenly over the FEC block in a first step, and spreading the FEC block as evenly as possible over the entire time interval in a second step, optionally using slicing.

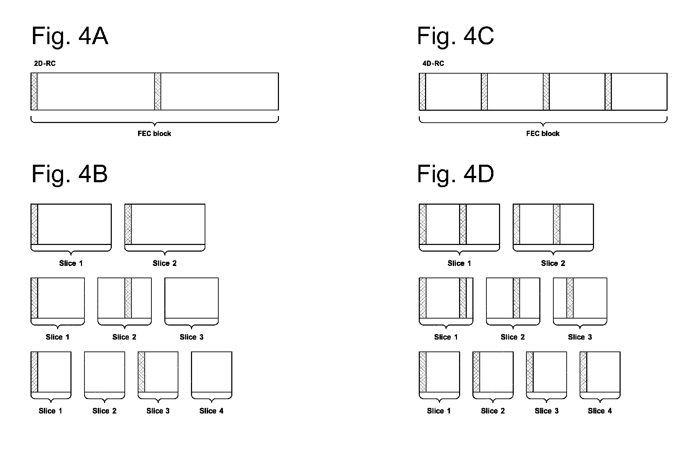

The spreading of the components of a constellation block over time is illustrated in Figs. 4A to 4D. The hatching indicates the D components of the first constellation block.

Fig. 4A and 4B show the spreading of a constellation block over the FEC block for a two-dimensional (D=2) rotated constellation (2D-RC) and a four-dimensional (D=4) rotated constellation (4D-RC), respectively.

Even when slicing is used, as shown in Fig. 4C and 4D for 2D-RC and 4D-RC, respectively, the resulting spreading in time of the D components is still as even as possible. Therefore, the proposed method is optimal.

In the case of a 2D-RC spread over four slices, it can easily be seen that mapping component pairs on frames 1&3 and 2&4 is the best solution since it ensures that the time interval between the two components of any constellation is two slice periods, i.e., maximal. Mapping on slices 1&2 and 3&4 also results in an even distribution but the time interval is only one slice period. Mapping on slices 1&4 and 2&3 is not good, because although the time interval is maximal (two slice periods) on average, it is not the same for all constellation blocks, being either 1 or 3 frames.

In the following, two methods for achieving the ideal even spreading of the D constellation components over the FEC block are described. As an example, a FEC block consisting of 24 complex cells is considered.

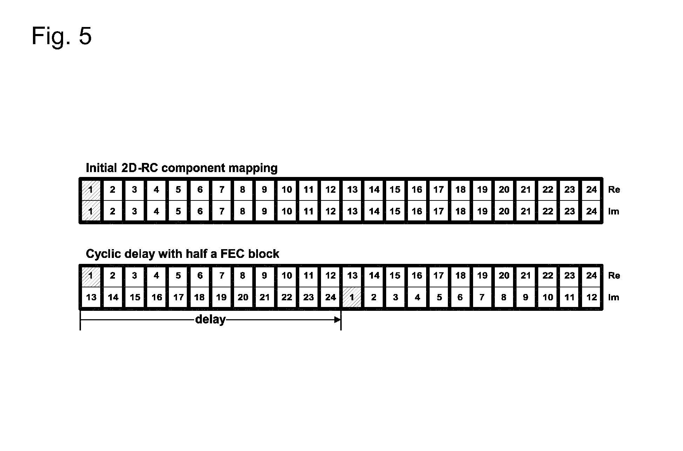

The first method, which is illustrated in Fig. 5, is applicable to 2D-RC only and consists of two steps: In a first step, the two components of each constellation block are mapped onto the same complex cell. In a second step, a relative delay of half a FEC block is applied between the real and the imaginary components of the cells in the FEC block. In other words, the imaginary components are rotated relative to the real components. The amount of rotation applied equals half the number of cells of the FEC block.

The second method also consists of two steps: In a first step, the D components of a constellation block are mapped onto D adjacent complex cells. In a second step, a permutation is applied to the cells of the FEC block so that the D adjacent components are evenly spread over the entire FEC block.

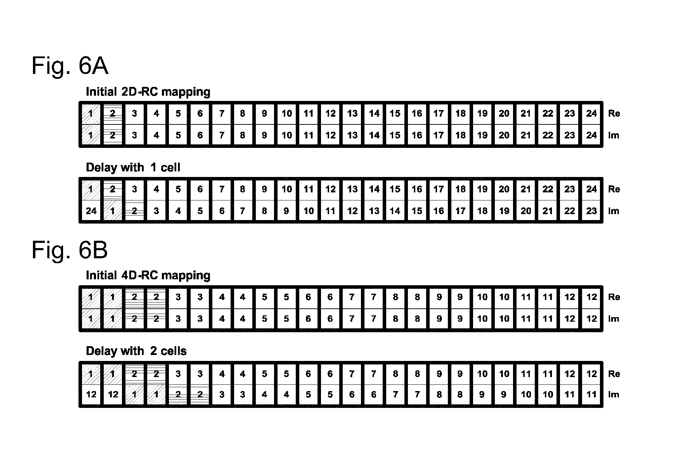

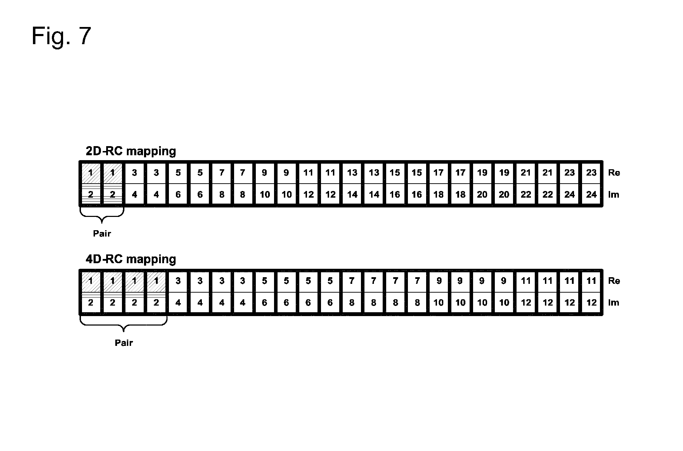

The first step of the second method can be performed in several ways that are not directly relevant to the present invention. A first option consists of: 1) mapping each constellation block onto D/2 adjacent complex cells, and 2) applying a relative delay of D/2 cells between the real and the imaginary components of the cells in the FEC block. An example is shown in Figs. 6A and 6B for 2D-RC and 4D-RC, respectively. A second option consists in mapping pairs of constellation blocks onto D adjacent cells. For example, one block may be mapped onto the real components, and the other onto the imaginary components of the D cells, as shown in Fig. 7 for 2D-RC and 4D-RC.

The permutation used in the second step of the second method can be conceptually implemented by writing the cells of the FEC block into a matrix with D rows column by column, and reading the cells out row by row. This is illustrated in Figs. 8A and 8B for 2D-RC and 4D-RC, respectively. Here, the numbered squares correspond to complex cells rather than to constellation components.

The number of columns in the matrix is ceil(C/D), where C is the number of cells per FEC block. If C is not a divisor of D the last column will be incomplete.

The same permutation may also be expressed in mathematical terms. When $C$ is a multiple of $D$, the output cell index $j$ can be expressed as a function of the input cell index i as follows.

$$j = \mathrm{rem}(i,\, D) * C/D + \mathrm{floor}(i/D);$$

where i, j are in the interval 0... C-1.

After applying this permutation, the resulting FEC block will consist of D contiguous regions, each region containing one component from each constellation block. The separation of the D components is therefore maximal and the spreading is as even as possible.

Figs. 9A and 9B show the resulting mapping of the constellation components after the permutation step for 2D-RC and 4D-RC, respectively, when cell mapping like in Figs. 6A and 6B is used. The even spread of the D components over the entire FEC block is apparent for all constellation blocks, i.e., a minimum distance between complex symbols with symbols of the same constellation block is, with at most one exception, the same for all constellation blocks. For 2D-RC, the minimum distance is 12 cells with the only exception of the 24th constellation block, having a distance of 23 cells. For 4D-RC, the minimum distance is 6 cells with no exception.

Once the D components have been evenly spread, the FEC block can be sliced prior to transmission, as in Figs 4B and 4D. Figs. 12A and 12B show an examplary slicing of the FEC blocks of Figs. 4B and 4D for 2D-RC and 4D-RC, respectively, into 2, 3, and 4 slices. The spreading of the D components for each constellation block is as good as it can be.

The slices are preferably of the same length. If this is not possible, their lengths should be as similar as possible. However, it cannot be guaranteed that the slices differ in at most one cell.

The above described even spreading of the D components of a constellation block over the FEC block is also the optimal solution for time-frequency slicing (TFS). Each FEC block is first divided into $N_c$ slices, one for each TFS cycle. Each of these slices is further divided into $N_{RF}$ sub-slices, as shown in Fig. 12A for 3 RF channels and interleaving over 3 TFS cycles. The resulting slices can be more intuitively represented as a matrix whose columns are the NRF channels, as shown in Figure 12B.

The inventor has further realized that the even spacing of the D components over a FEC block illustrated in Figs. 4A and 4C, which ensures an optimal separation in time, leads to a non-even mapping of the D components onto the available RF channels for some TFS configurations, which affects the performance of the system. In order to illustrate this finding, the resulting mapping of the D components for a number of TFS cycles from 2 to 6 is shown in Figure 13 for 2D-RC and 4D-RC. The drawings are obtained by simply slicing the FEC block of Figs. 4A and 4C into as many slices as there are TFS cycles and stacking the resulting slices on top of each other like in Figure 12B. Note that the number of RF channels is irrelevant for this first step of the analysis.

From Fig. 13 it can be observed that the resulting pattern may or may not be periodic. Periodic (repetitive) patterns occur whenever the number of TFS cycles $N_c$ and the number of dimensions D have a common divisor, i.e. are not mutually prime. Their greatest common divisor will be denoted by $N_P$ and represents the number of periods in the resulting mapping pattern. The number of TFS cycles per period is $N_C/N_P$, and the number of constellation components in each period (denoted hereafter by $D_P$) is $D/N_P$. For instance, when a FEC block containing 4D-RC (D=4) is spread over 6 TFS cycles, $N_P=2$ and $D_P=2$.

The existence of a periodicity in the mapping pattern does not necessary lead to reduced channel diversity. It all depends on the number of RF channels $N_{RF}$ and the number of components per period $D_P$. Figs. 14-16 illustrate the component distribution of Fig. 13 for 2, 3, and 4 RF channels, respectively. From these figures it is apparent that if $D_P$ is equal to $N_{RF}$ or a multiple thereof, the mapping is perfectly balanced, i.e. each RF channel contains the same number of components from each constellation block.

One such configuration is shown in Fig. 14 for 4D-RC (D=4), $N_C=2$, and $N_{RF}=2$ (upper right corner). For this configuration $N_P=2$ and $D_P=2$. However, for 2D-RC (D=2) (upper left corner) there will be only one component per period ($D_P=1$), therefore both components will be mapped onto the same RF channel.

To summarize, reduced channel diversity occurs when the following conditions are both fulfilled: 1)

$N_P$ = gcd($N_C$,D) > 1, and 2) $N_D$ = D/$N_P$ is not equal to $N_{RF}$ or a multiple thereof.

The table shown in Fig. 17 identifies these configurations (thick cell borders) for $N_C$ from 2 to 8, $N_{RF}$ from 2 to 6, and for 2D-RC, 4D-RC, and 8D-RC, respectively.

According to a preferred embodiment of the present invention, a cyclic shift may be applied to some TFS cycles in order to avoid any reduction of the channel diversity that would otherwise occur in some configurations. This apporach is illustrated in Figs. 18 and 19 for 2D-RC and 4D-RC, respectively, for those configurations of Figure 13 that exhibit periodic patterns.

The amount of shift may be the same for all cycles in a mapping period. Also, the amount of shift may be given by the following simple expression:

$$\text{shift} = p/D;$$

where p is the zero-based period index (0, ..., $N_P$-1)

The shift is expressed as a fraction of the number of cells in a TFS cycle. If the resulting shift in cells is fractional, it may be rounded to the nearest integer.

In the above considerations, the length of the FEC block has not been taken into account. In a typical embodiment, each FEC block will have a discrete and limited number of cells. However, the present invention may be applied irrespective of the specific length of the FEC block, the number of dimensions D, the number of slices, and the number of frequency channels.

Figs. 20 and 21 show specific examples of how the interleaved FEC blocks for 2D-RC and 4D-RC of Fig. 9 are processed for TFS with three RF channels and two TFS cycles per FEC block. It can clearly be seen that each constellation block is evenly distributed both over time and over the $N_{RF}$ channels.

If the number of cells per FEC block C is not a multiple of the number of TFS cycles $N_C$, the slices will differ in one cell, but this does not change any of the aspects discussed so far. The number of cells per slice will be floor(C/$N_C$) or floor(C/$N_C$)+1. The amount of shift for the cycles in period p can be computed, for instance, as p*floor(C/$N_C$)/D, or by using any other rounding strategy.

The methods disclosed above are typically performed in the cell interleaver 150 in Fig. 1. The cell interleaver performs at least the cell permutation illustrated in Figs. 8 and 9, which spreads D adjacent cells evenly over the FEC block.

In the case of TFS, for those configurations for which the resulting mapping of the D components onto the $N_{RF}$ channels is not even (balanced), the cell interleaver may contain an additional stage that performs the steps illustrated for example in Figs. 20 and 21.

Figure 22 is a block diagram of a receiver in accordance with an embodiment of the present invention. The receiver mirrors the functionality of the transmitter of Fig. 1. The received signal is first processed by a radio-frequency RF frontend (290, 285), which typically comprises a tuner and a down-converter to digital baseband. In the case of time-frequency slicing, the RF frontend hops between RF channels, according to the TFS scheduling information signaled by the transmitter.

The digital baseband signal is then demodulated by the demodulator 280, resulting in a stream of complex cells and their associated complex channel coefficients.

The cells belonging to the desired services or programs are extracted by cell extractor 270 from the demodulated cell stream according to the scheduling information signaled by the transmitter. The extracted cells are further deinterleaved by the time deinterleaver 260, which produces at its output a plurality of FEC blocks consisting of cells. The cells of each FEC block are deinterleaved by the cell deinterleaver 250, which performs the inverse of the operations disclosed above in connection with the transmitter.

The D components of the constellation blocks mapped onto the complex cells of each FEC block are then extracted from the FEC block by the cell demapper 240 and demodulated by the constellation demapper 220. The latter demodulates D real symbols jointly and produces B*D "soft" bits per constellation block at its output. The soft bits of each FEC block are then decoded by the FEC decoder 210 and fed to the subsequent blocks for further processing.

Summarizing, the present invention provides methods, transmitters, and receivers for digital communication systems with improved time and channel diversity for rotated QAM constellations with time-frequency slicing. This is achieved by spreading the components of each constellation block evenly over time so that the temporal distance between components of the same constellation block is maximized. Moreover, a cyclic shift may be applied to the cells of some cycles in a time-frequency slicing scheme in order to ensure that the components of all constellation blocks are evenly distributed over all frequency channels. The amount of shift applied may depend on the specifics of the constellation and the time-frequency slicing scheme employed. Specific implementations of a permutation that is to be applied to the cells of a forward-error-correction block are disclosed.

**Claims**

1. A method for transmitting digital data over a plurality of $N_{RF}$ frequency channels, said method comprising the steps of:

   encoding a block of data with a forward error correction code;
   mapping the encoded block of data to a sequence of real-valued symbols, the sequence of real-valued symbols being divided into a plurality of D-dimensional vectors;

transforming each of the *D*-dimensional vectors by multiplying the vector with an orthogonal matrix, resulting in a plurality of constellation blocks, each constellation block consisting of D real-valued transformed symbols;

mapping the real-valued transformed symbols of the plurality of constellation blocks to a sequence of complex symbols such that the D real-valued transformed symbols of each constellation block are essentially evenly distributed over the sequence of complex symbols;

dividing the sequence of complex symbols into a plurality of slices, each slice being mapped to one of the $N_{RF}$ frequency channels; and

transmitting the complex symbols of each slice over the corresponding frequency channel.

2. A method according to claim 1, wherein the complex symbols of each slice are transmitted over the corresponding frequency channel such that any two consecutive complex symbols of the sequence of complex symbols are transmitted either simultaneously or in the stated order.

3. A method according to claim 1 or 2, wherein the mapping of the real-valued transformed symbols to the sequence of complex symbols is performed such that a minimum distance between complex symbols with symbols of the same constellation block is, with at most one exception, the same for all constellation blocks.

4. A method according to claim 1 or 3, wherein the mapping of the real-valued transformed symbols to the sequence of complex symbols is performed such that each of the D real-valued transformed symbols of any given constellation block is transmitted via a distinct frequency channel if the number of dimension D is less than or equal to the number of frequency channels $N_{RF,}$ or such that at least $N_{RF}$ real-valued transformed symbols of any given constellation block are transmitted via a distinct frequency channel if the number of dimension D is greater than the number of frequency channels $N_{RF}$.

5. A method according to any of claims 1 to 4, wherein the step of mapping the real-valued transformed symbols to the sequence of complex symbols is performed by

mapping the D real-valued transformed symbols of each constellation block to D adjacent complex cells, and

applying a permutation to the sequence of complex symbols, said permutation being equivalent to writing the sequence of complex symbols into a matrix with D rows column by column and reading out the complex symbols row by row.

6. A method according to any of claims 1 to 4 with D=2, wherein the step of mapping the real-valued transformed symbols to the sequence of complex symbols is performed by

mapping the two real-valued transformed symbols of each constellation block to one complex symbol of the sequence of complex symbols, and

applying a cyclic shift to either the real or the imaginary components of the sequence of complex symbols such that the real and the imaginary components are rotated relative to each other by a certain number of complex symbols, the certain number of complex symbols being equal to half the number of complex symbols within the sequence of complex symbols.

7. A method according to any of claims 1 to 5, further comprising the step of applying a cyclic shift to the complex symbols of a cycle of $N_{RF}$ consecutive slices such that the D real-valued transformed symbols of each constellation block are essentially evenly distributed over the $N_{RF}$ frequency channels.

8. A method according to any of claims 1 to 7, further comprising the steps of

dividing the sequence of complex symbols into a plurality of $N_C$ cycles and each cycle into a plurality of $N_{RF}$ slices, the slices of each cycle being mapped to a different one of the $N_{RF}$ frequency channels;

dividing the sequence of complex symbols into $N_P$ periods, $N_P$ being the greatest common divisor of the number of cycles $N_C$ and the number of dimensions D;

applying, if the number of periods $N_P$ is greater than one, a cyclic shift to the complex symbols of each cycle of a period of the plurality of periods, such that the complex symbols of the cycle are rotated by a certain fraction of the number of complex symbols in the cycle, the certain fraction being equal to p/D with p = 0, ..., $Np$-1 being a zero-based index of the period.

9. A method for receiving digital data over a plurality of $N_{RF}$ frequency channels, said method comprising the steps of:

receiving complex symbols of each slice of a plurality of slices over a corresponding one of the $N_{RF}$ frequency channels;

obtaining a sequence of complex symbols by joining the received complex symbols;

demapping a plurality of constellation blocks from the sequence of complex symbols, each constellation block consisting of D real-valued symbols, the D real-valued symbols of each constellation block being essentially evenly distributed over the sequence of complex symbols; demapping an encoded block of data from the sequence of real-valued symbols; and subjecting the encoded block of data to forward error correction decoding.

10. A method according to claims 9, wherein the D real-valued symbols of each constellation block are essentially evenly distributed over the $N_{RF}$ frequency channels.

11. A method according to claim 10 or 11, wherein each of the D real-valued symbols of any given constellation block is received via a distinct frequency channel if the number of dimension D is less than or equal to the number of frequency channels $N_{RF}$, or wherein at least $N_{RF}$ real-valued symbols of any given constellation block are received via a distinct frequency channel if the number of dimension D is greater than the number of frequency channels $N_{RF}$.

12. A method according to any of the preceding claims, wherein each real-valued symbol indicates one of a plurality of predefined pulse amplitude modulation symbols.

13. A method according to any of the preceding claims, wherein D is a power of two, preferably 2 or 4 or 8.

14. A method according to any of the preceding claims, wherein a number of complex symbols per slice differs by at most one among the plurality of slices.

15. A transmitter for transmitting digital data over a plurality of $N_{RF}$ frequency channels, said transmitter comprising:

    an encoder (110) for encoding a block of data with a forward error correction code; a symbol mapper (120) for mapping the encoded block of data to a sequence of real-valued symbols, the sequence of real-valued symbols being divided into a plurality of $D$-dimensional vectors; a transform unit (130) for transforming each of the $D$-dimensional vectors by multiplying the vector with an orthogonal matrix, resulting in a plurality of constellation blocks, each constellation block consisting of D real-valued transformed symbols; a cell mapper (140) for mapping the real-valued transformed symbols of the plurality of constellation blocks to a sequence of complex symbols; a cell interleaver (150) for permuting the sequence of complex symbols such that the D real-valued transformed symbols of each constellation block are essentially evenly distributed over the permuted sequence of complex symbols; a scheduler (170) for dividing the sequence of complex symbols into a plurality of slices, each slice being mapped to one of the $N_{RF}$ frequency channels; and a plurality of modulators (180-1, ..., 180-n) for transmitting the complex symbols of each slice over the corresponding frequency channel.

16. A receiver for receiving digital data over a plurality of $N_{RF}$ frequency channels, said receiver comprising:

    a demodulator (280) for receiving complex symbols of each slice of a plurality of slices over a corresponding one of the $N_{RF}$ frequency channels and for obtaining a sequence of complex symbols by joining the received complex symbols; a cell deinterleaver and demapper (250, 240) for demapping a plurality of constellation blocks from the sequence of complex symbols, each constellation block consisting of D real-valued symbols, the D real-valued symbols of each constellation block being essentially evenly distributed over the sequence of complex symbols; a constellation demapper (220) for demapping an encoded block of data from the sequence of real-valued symbols; and a decoder (210) for subjecting the encoded block of data to forward error correction decoding.

# Fig. 1

## Fig. 2A

**Interleaver input**

| 1 | 1 | 1 | 1 | 1 | 1 | 1 | 1 | 2 | 2 | 2 | 2 | 2 | 2 | 2 | 2 | 3 | 3 | 3 | 3 | 3 | 3 | 3 | 3 | ← FEC block index |
| 1 | 2 | 3 | 4 | 5 | 6 | 7 | 8 | 1 | 2 | 3 | 4 | 5 | 6 | 7 | 8 | 1 | 2 | 3 | 4 | 5 | 6 | 7 | 8 | ← Cell index within FEC block |

FEC block 1       FEC block 2       FEC block 3

**Interleaver output**

| 1 | 2 | 3 | 1 | 2 | 3 | 1 | 2 | 3 | 1 | 2 | 3 | 1 | 2 | 3 | 1 | 2 | 3 | 1 | 2 | 3 | 1 | 2 | 3 |
| 1 | 1 | 1 | 2 | 2 | 2 | 3 | 3 | 3 | 4 | 4 | 4 | 5 | 5 | 5 | 6 | 6 | 6 | 7 | 7 | 7 | 8 | 8 | 8 |

Time

## Fig. 2B

| 1 | 2 | 3 | 1 | 2 | 3 |
| 1 | 1 | 1 | 2 | 2 | 2 |

Slice 1

| 1 | 2 | 3 | 1 | 2 | 3 |
| 3 | 3 | 3 | 4 | 4 | 4 |

Slice 2

| 1 | 2 | 3 | 1 | 2 | 3 |
| 5 | 5 | 5 | 6 | 6 | 6 |

Slice 3

| 1 | 2 | 3 | 1 | 2 | 3 |
| 7 | 7 | 7 | 8 | 8 | 8 |

Slice 4

Time

Fig. 3

Fig. 4A

2D-RC

FEC block

Fig. 4C

4D-RC

FEC block

Fig. 4B

Slice 1    Slice 2

Slice 1    Slice 2    Slice 3

Slice 1    Slice 2    Slice 3    Slice 4

Fig. 4D

Slice 1    Slice 2

Slice 1    Slice 2    Slice 3

Slice 1    Slice 2    Slice 3    Slice 4

# Fig. 5

**Initial 2D-RC component mapping**

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Re |
| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Im |

**Cyclic delay with half a FEC block**

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Re |
| 13 | 14 | 15 | 16 | 17 | 18 | 19 | 20 | 21 | 22 | 23 | 24 | 1 | 2 | 3 | 4 | 5 | 6 | 7 | 8 | 9 | 10 | 11 | 12 | Im |

|←————————delay————————→|

## Fig. 6A

**Initial 2D-RC mapping**

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Re |
| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Im |

**Delay with 1 cell**

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Re |
| 24 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | Im |

## Fig. 6B

**Initial 4D-RC mapping**

| 1 | 1 | 2 | 2 | 3 | 3 | 4 | 4 | 5 | 5 | 6 | 6 | 7 | 7 | 8 | 8 | 9 | 9 | 10 | 10 | 11 | 11 | 12 | 12 | Re |
| 1 | 1 | 2 | 2 | 3 | 3 | 4 | 4 | 5 | 5 | 6 | 6 | 7 | 7 | 8 | 8 | 9 | 9 | 10 | 10 | 11 | 11 | 12 | 12 | Im |

**Delay with 2 cells**

| 1 | 1 | 2 | 2 | 3 | 3 | 4 | 4 | 5 | 5 | 6 | 6 | 7 | 7 | 8 | 8 | 9 | 9 | 10 | 10 | 11 | 11 | 12 | 12 | Re |
| 12 | 12 | 1 | 1 | 2 | 2 | 3 | 3 | 4 | 4 | 5 | 5 | 6 | 6 | 7 | 7 | 8 | 8 | 9 | 9 | 10 | 10 | 11 | 11 | Im |

Fig. 7

**2D-RC mapping**

| | | 3 | 3 | 5 | 5 | 7 | 7 | 9 | 9 | 11 | 11 | 13 | 13 | 15 | 15 | 17 | 17 | 19 | 19 | 21 | 21 | 23 | 23 | Re |
| 2 | 2 | 4 | 4 | 6 | 6 | 8 | 8 | 10 | 10 | 12 | 12 | 14 | 14 | 16 | 16 | 18 | 18 | 20 | 20 | 22 | 22 | 24 | 24 | Im |

Pair

**4D-RC mapping**

| | | | | 3 | 3 | 3 | 3 | 5 | 5 | 5 | 5 | 7 | 7 | 7 | 7 | 9 | 9 | 9 | 9 | 11 | 11 | 11 | 11 | Re |
| 2 | 2 | 2 | 2 | 4 | 4 | 4 | 4 | 6 | 6 | 6 | 6 | 8 | 8 | 8 | 8 | 10 | 10 | 10 | 10 | 12 | 12 | 12 | 12 | Im |

Pair

Fig. 8A

Fig. 8B

**2D-RC**

**4D-RC**

## Fig. 9A

2D-RC

Component index 1    Component index 2

## Fig. 9B

4D-RC

Component index 1   Component index 2   Component index 3   Component index 4

# Fig. 10

**2D-RC**

Permuted FEC block

Slice 1        Slice 2

Slice 1     Slice 2     Slice 3

Slice 1    Slice 2    Slice 3    Slice 4

# Fig. 11

**4D-RC**

Permuted FEC block

Slice 1          Slice 2

Slice 1          Slice 2          Slice 3

Slice 1          Slice 2          Slice 3          Slice 4

Fig. 12A

| 1 | 2 | 3 | 4 | 5 | 6 | 7 | 8 | 9 |
|---|---|---|---|---|---|---|---|---|

RF 1   RF 2   RF 3    RF 1   RF 2   RF 3    RF 1   RF 2   RF 3

Cycle 1      Cycle 2      Cycle 3

FEC block

Fig. 12B

| | | |
|---|---|---|
| Cycle 1 → 1 | 2 | 3 |
| Cycle 2 → 4 | 5 | 6 |
| Cycle 3 → 7 | 8 | 9 |

RF 1   RF 2   RF 3

Fig. 13

Fig. 14

Fig. 15

Fig. 16

# Fig. 17

| $N_{RF}$ | D | Number of TFS cycles $N_C$ | | | | | | |
|---|---|---|---|---|---|---|---|---|
| | | 2 | 3 | 4 | 5 | 6 | 7 | 8 |
| 2 | 2 | $N_P=2$ $D_P=1$ | $N_P=1$ | $N_P=2$ $D_P=1$ | $N_P=1$ | $N_P=2$ $D_P=1$ | $N_P=1$ | $N_P=2$ $D_P=1$ |
| | 4 | $N_P=2$ $D_P=2$ | $N_P=1$ | $N_P=4$ $D_P=1$ | $N_P=1$ | $N_P=2$ $D_P=2$ | $N_P=1$ | $N_P=4$ $D_P=1$ |
| | 8 | $N_P=2$ $D_P=4$ | $N_P=1$ | $N_P=4$ $D_P=2$ | $N_P=1$ | $N_P=2$ $D_P=4$ | $N_P=1$ | $N_P=8$ $D_P=1$ |
| 3 | 2 | $N_P=2$ $D_P=1$ | $N_P=1$ | $N_P=2$ $D_P=1$ | $N_P=1$ | $N_P=2$ $D_P=1$ | $N_P=1$ | $N_P=2$ $D_P=1$ |
| | 4 | $N_P=2$ $D_P=2$ | $N_P=1$ | $N_P=4$ $D_P=1$ | $N_P=1$ | $N_P=2$ $D_P=2$ | $N_P=1$ | $N_P=4$ $D_P=1$ |
| | 8 | $N_P=2$ $D_P=4$ | $N_P=1$ | $N_P=4$ $D_P=2$ | $N_P=1$ | $N_P=2$ $D_P=4$ | $N_P=1$ | $N_P=8$ $D_P=1$ |
| 4 | 2 | $N_P=2$ $D_P=1$ | $N_P=1$ | $N_P=2$ $D_P=1$ | $N_P=1$ | $N_P=2$ $D_P=1$ | $N_P=1$ | $N_P=2$ $D_P=1$ |
| | 4 | $N_P=2$ $D_P=2$ | $N_P=1$ | $N_P=4$ $D_P=1$ | $N_P=1$ | $N_P=2$ $D_P=2$ | $N_P=1$ | $N_P=4$ $D_P=1$ |
| | 8 | $N_P=2$ $D_P=4$ | $N_P=1$ | $N_P=4$ $D_P=2$ | $N_P=1$ | $N_P=2$ $D_P=4$ | $N_P=1$ | $N_P=8$ $D_P=1$ |
| 5 | 2 | $N_P=2$ $D_P=1$ | $N_P=1$ | $N_P=2$ $D_P=1$ | $N_P=1$ | $N_P=2$ $D_P=1$ | $N_P=1$ | $N_P=2$ $D_P=1$ |
| | 4 | $N_P=2$ $D_P=2$ | $N_P=1$ | $N_P=4$ $D_P=1$ | $N_P=1$ | $N_P=2$ $D_P=2$ | $N_P=1$ | $N_P=4$ $D_P=1$ |
| | 8 | $N_P=2$ $D_P=4$ | $N_P=1$ | $N_P=4$ $D_P=2$ | $N_P=1$ | $N_P=2$ $D_P=4$ | $N_P=1$ | $N_P=8$ $D_P=1$ |
| 6 | 2 | $N_P=2$ $D_P=1$ | $N_P=1$ | $N_P=2$ $D_P=1$ | $N_P=1$ | $N_P=2$ $D_P=1$ | $N_P=1$ | $N_P=2$ $D_P=1$ |
| | 4 | $N_P=2$ $D_P=2$ | $N_P=1$ | $N_P=4$ $D_P=1$ | $N_P=1$ | $N_P=2$ $D_P=2$ | $N_P=1$ | $N_P=4$ $D_P=1$ |
| | 8 | $N_P=2$ $D_P=4$ | $N_P=1$ | $N_P=4$ $D_P=2$ | $N_P=1$ | $N_P=2$ $D_P=4$ | $N_P=1$ | $N_P=8$ $D_P=1$ |

EP 2 592 773 A1

Fig. 18

Fig. 19

Fig. 20

# Fig. 21

Fig. 22

290   285        280      270         260          250          240          220          210

| RF Frontend | Demodulator | Cell Extractor | Time Deinterleaver | Cell Deinterleaver | Cell Demapper | Constellation Demapper | FEC Decoder |

200

Europäisches
Patentamt

European
Patent Office

Office européen
des brevets

# EUROPEAN SEARCH REPORT

Application Number

EP 11 18 8628

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mikel Mendicute, Iker Sobrón, Lorena Martínez and Pello Ochandiano: "DVB-T2: New Signal Processing Algorithmsfor a Challenging Digital VideoBroadcasting Standard", University of Mondragon Digital Video, Floriano da Rango, 1 February 2010 (2010-02-01), pages 185-206, XP002675633, Retrieved from the Internet: URL:http://cdn.intechopen.com/pdfs/8519/In Tech-Dvb_t2_new_signal_processing_algorith ms_for_a_challenging_digital_video_broadca sting_standard.pdf [retrieved on 2012-05-09] | 1-4,9-16 | INV. H04L1/00 H03M13/27 H04L27/34 |
| A | * sections 2,3 and 7. * | 5-8 | |
| X | WO 2009/069622 A1 (SONY CORP [JP]; YOKOKAWA TAKASHI [JP]; YAMAMOTO MAKIKO [JP]) 4 June 2009 (2009-06-04) * abstract; figures 38-41 * | 1,9,15, 16 | |
| | | | TECHNICAL FIELDS SEARCHED (IPC) |
| A | WU ZHANJI ET AL: "A novel Joint-Coding-Modulation-Diversity OFDM system", MOBILE CONGRESS (GMC), 2010 GLOBAL, IEEE, PISCATAWAY, NJ, USA, 18 October 2010 (2010-10-18), pages 1-6, XP031800622, ISBN: 978-1-4244-9001-1 * section II * | 1-16 | H04L H03M |

-/--

The present search report has been drawn up for all claims

| Place of search | Date of completion of the search | Examiner |
|---|---|---|
| Munich | 10 May 2012 | Martínez Martínez, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| Europäisches Patentamt European Patent Office Office européen des brevets | **EUROPEAN SEARCH REPORT** | Application Number EP 11 18 8628 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RUI YE ET AL: "Design of Multiple Turbo-Coded modulation diversity", COMMUNICATIONS, CIRCUITS AND SYSTEMS, 2008. ICCCAS 2008. INTERNATIONAL CONFERENCE ON, IEEE, PISCATAWAY, NJ, USA, 25 May 2008 (2008-05-25), pages 105-108, XP031352888, DOI: 10.1109/ICCCAS.2008.4657738 ISBN: 978-1-4244-2063-6 * sections II. B and II. C. * ----- | 1-16 | |
| | | | TECHNICAL FIELDS SEARCHED (IPC) |

The present search report has been drawn up for all claims

| Place of search | Date of completion of the search | Examiner |
|---|---|---|
| Munich | 10 May 2012 | Martínez Martínez, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 18 8628

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2012

| Patent document cited in search report | Publication date | Patent family member(s) | Publication date |
|---|---|---|---|
| WO 2009069622 A1 | 04-06-2009 | TW 200943735 A | 16-10-2009 |
| | | WO 2009069622 A1 | 04-06-2009 |

For more details about this annex : see Official Journal of the European Patent Office, No. 12/82

**EP 2 592 773 A1**

**Patent documents cited in the description**

- EP 2288048 A